# EUROPEAN PATENT APPLICATION

(11) **EP 2 774 484 A1**
(43) Date of publication of application: **10.09.2014**
(21) Application number: 13158005.2
(22) Date of filing: 06.03.2013
(51) Int. Cl.: A01N 45/00, A01N 37/42, A01P 21/00

(54) **Method for fruit thinning at late growth stages of fruit plants**

(71) Applicant: BASF SE, 67056 Ludwigshafen (DE)
(72) Inventor: Lafer, Gottfried, Dr., 8047 Graz (AT)

(57) **Abstract**

The present invention further relates to a use of said mixture of an acylcyclohexanedione and at least one gibberellin for fruit thinning of fruit plants. The invention further relates to a method for fruit thinning of fruit plants comprising the application of an aqueous composition containing a mixture of an acylcyclohexanedione of the formula I as defined below, or a salt of said acylcyclohexanedione of the formula I and at least one gibberellin onto fruit plants at their growth stage BBCH from 71 to 75. The invention also relates to an aqueous composition comprising an auxiliary and the mixture as defined herein.

## Description

The present invention relates to a method for fruit thinning of fruit plants comprising the application of an aqueous composition containing a mixture of an acylcyclohexanedione of the formula I as defined below, or a salt of said acylcyclohexanedione of the formula I and at least one gibberellin onto the fruit plants at their growth stage BBCH from 71 to 75. The invention further relates to a use of said mixture of an acylcyclohexanedione and at least one gibberellin for fruit thinning of fruit plants. The invention further relates to an aqueous composition comprising an auxiliary and the mixture as defined herein. Combinations of preferred embodiments with other preferred embodiments are within the scope of the present invention.

For the production of high-quality fruits a suitable density of fruits per tree and/or per infructescence is of high importance. This is particularly important for the production of pome fruits and in particular for apples. A too low number of fruits leads to yield depressions and to oversized fruits with condition problems and can have as a consequence that a too high number of blossom buds is formed. In the coming season, this will result in a too high density of fruits of reduced quality. Frequently, it can even cause branches to break off. Trees that produce a too high fruit density meaning a very heavy crop usually have a light bloom and a light crop (low fruit densitiy) the following year. This often initiates a continuing cycle of alternating light and heavy crops that is known as biennial or alternate bearing. Such cycles are very often caused by blossom frosts or other climatic events as well as due to cultivation errors. Total production suffers because the heavy crops from the one year do not compensate for the light crop in the next year. Further, marketing is a problem because there is never a normal range of fruit sizes. Finally, management of higher density plantings is more difficult because regular, consistent cropping is the first step in controlling vegetative growth (New York's Food and Life Scineces Bulletin 116, (1986) 1-7).

The avoidance or correction of such under or over fruit density plays in professional fruit-growing a large role. Generally, it is aimed that per inflorescence or cluster about one to three fruits are formed.

Under normal conditions the number of blooms in pome fruits is far more than sufficient for an adequate fruit density. Natural thinning mechanisms at the time of the blossoming or few days later (blossom drop) or at fruit sizes of approx. 6 to 10 mm approx. one month after blossoming (June fruit drop) cause that only approx. 5% of the originally existing blossoms become fruits.

In case of a low blossom intensity or after bloom losses by late frosts it is to be ensured that the natural drop of further blossoms and/or young fruits is minimized to obtain still a reasonable or best-possible fruit density. Bioregulatory compounds such as naphthaleneacetic acid or naphthaleneacetamide in relative low doses are then applied during blossoming or thereafter to achieve of an auxin-like and thus fruit-retending effect. Treatments with Prohexadione-Ca also stimulate fruit set and lead to an increased retention of blooms and fruits (HortScience 34, (1999) 1209-1212). Also Gibberellin A₄ (GA₄) is used to promote the fruit set of apple and pear trees. The alternate bearing of some cultivars can be overcome by applying GA₄ in the "off" year (with low blossom densities) to inhibit the formation of flower buds for the following growing season,

In the opposite case of a heavy crop or to high blossom or fruit densitiy often manual thinning is applied, which usually leads to acceptable results, but which is very time-consuming and labor-intensive. Machine procedures for mechanical thinning are likewise known. Apart from the relatively high investment costs here the danger exists that mechanical thinning leads to injuries of leaves and shoots which may serve as entrance for pathogens, in particular for fire blight. Frequently, also chemical thinning methods are used. For bloom or blossom thinning, compounds which are caustic to the flower parts and prevent pollination, such as dinitro-ortho-cresol, hydrogen cyanamide or ammonia thiosulfate, and the ethylene-releasing compounds, such as ethephon, are used (Plant Growth Regulation 31, (2000) 1-16; Plant Growth Regulation 31, (2000) 85-100; Acta Hort. 636, ed. A.D. Webster, (2004) 311-315). Dinitro-ortho-cresol and hydrogen cyanamide are not any more available because of their acute-toxic characteristics. In addition, ethephon, ammonia thiosulfate and other substances are frequently too strong or too weak in their thinning effect and can lead to damages of the fruit surface and lowered fruit firmness.

Later in the growing season during fruit development, several bio regulators can be used for so-called fruit thinning (Plant Growth Regulation 31, (2000) 1-16; Plant Growth Regulation 31, (2000) 85-100). Here in particular substances with act on the auxin status are such as naphthaleneacetic acid, naphthaleneacetamide and carbaryl are applied. These compounds induce in higher dose the formation of ethylene and thus cause drop of fruits. Also ethephon can be used to the fruit thinning. Of some practical importance is also the cytokinin benzyladenine.

The most reliable fruit thinning effects can be usually obtained by the compound carbaryl. It can be applied to apple as a chemical thinner any time from 80% petal fall (about BBCH growth stage 67) to about 16 mm fruit size (about growth stage 72), thus also at relativily late growth stages (J. Hort. Sci. 62, (1987) 11-16). This late application timing is advantegous allows the farmer to determine the natural fruit set first and to determine the necessity for an artificial thinning before the application (Plant Growth Regulation 31, (2000) 85-100). Because of its unspecific insecticidal side-effects (e.g. toxix to bees) the use of carbaryl for fruit thinning has been forbidden in most countries. A replacement or an improvement - in particular concerning the late fruit thinning - is accordingly urgently looked for.

Besides the use of the abovementioned blossom or fruit thinning compounds other bioregulatory compounds are used in the production of pome fuits e.g. for the regulation of the vegetative growth. For example, Prohexadione-Ca is applied in apples to control shoot growth and thus to reduce the expenditures needed for cut measures. As side effect, it may also lead to a reduction of fire blight incidence.

Gibberellins, such as a mixture of gibberellins A₄ and A₇ (also called GA_{4/7}; depending upon manufacturer the content of gibberellin A₄ is between approx. 60 and 95% of the sum of both gibberellins) is used to improve in certain apple varieties, e.g. Golden Delicisous, the ocverall fruit finish by preventing abnormal cell divisions in the epidermal layer that produce "russetting", caused by cuticle cracking (J. Hort. Sci. 53, (1978) 167-169; J. Hort. Sci. 67, (1992) 841-847). The russetted appearance of the apple fruit is considered by many consumers to be undesirable. The mixture GA_{4/7} is a well known plant growth regulator for suppression of pre harvest fruit cracking in apples, which is commercially available for example as NOVAGIB® (SL formulation GA_{4/7} at 10 g/L; from Fine Agrochemicals Ltd., UK).

The more persistant gibberellin A₃ (gibberellic acid) is likewise commercially available, but not of relevance for the cultivation of pome fruits because of its unwanted promotion of shoot growth and negative effects on the flowering intensity in the year after the treatment (J. Appl. Sci. Res. 2(8), (2006) 477-483).

In many cases the effect of bio regulators is complex. The dosage applied it of major importance. Low dosages of auxin-active compounds primarily increase fruit set, whereas high dosages can reduce fruit set. Accordingly a variety of findings exist in the scientific literature which are not very consistent and which frequently even contradict each other. Further, the effect of other bioregulatory-active compounds such as GA_{4/7} or Prohexadione-Ca was examined - in combination with known chemical fruit thinners - for fruit set (Plant Growth Regulation 31, (2000) 85-100; J. Am. Pomol. Soc. 58, (2004) 111-117). It was stressed that the well known fruit thinner benzyleadenine should be used alone and not in combination with gibberellins (e.g. product Promalin = GA_{4/7}; Plant Growth Regulation 31, (2000) 85-100). Prohexadione-Ca (three applications) was found not to affect the fruit-thinning effect of carbaryl, ethephon or oxamyl (one application between the first and second Prohexadione-Ca application), but rather leads to a slightly increased fruit set (J. Am. Pomol. Soc. 58, (2004) 111-117 - table 2 therein). An increased fruit set due to Prohexadione-Ca treatment especially around petal fall or shortly thereafter has been reported elsewhere (see e.g. HortScience 42, (2007) 1361-1365; HortScience 43, (2008) 376-379). Earlier application has not rrecommended because Prohexadione-Ca is taken up primarily by the leaves and sufficient leaf area does not develop before the time period between full bloom and petal fall. Later application has been found equally inadvisable to achieve the intended reduction of vegetative growth because the majority of terminal growth occurs during a short time period after bloom (HortScience 42, (2007) 1361-1365).

In the quoted experiments the different applications of Prohexadione-Ca and/or GA_{4/7} were always at the time of the bloom fall (petal fall = PF), thus during the growth stages BBCH 65 to 67. Further, none of the abovementioned publications recommends to use of Prohexadione-Ca or GA_{4/7} - alone or in combination - for fruit thinning in pome fruits, in particular for apple trees.

In many cases, in particular at low application rates, the fruit thinning activity of the known fruit thinning compounds is unsatisfactory. Based on this, it was an object of the present invention to provide mixtures having improved fruit thinning activity and/or an improved application timing window.

This object is achieved by using a mixture of an acylcyclohexanedione and at least one gibberellin for fruit thinning in fruit plants.

The object was achieved by a use of a mixture comprising, as active components,
1) at least one compound of formula I 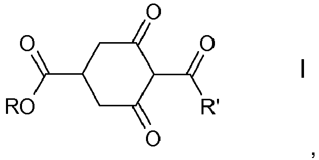 wherein
   R is hydrogen or C1-C6-alkyl, and R' is C1-C6-alkyl or C3-C6-cycloalkyl, or a salt of said acylcyclohexanedione of the formula I;
   and
2) at least one gibberellin;
for fruit thinning in fruit plants.

The acylcyclohexanedione compounds I may be present both in the trione form (triketo form) I.a and in the tautomeric: keto-enol forms I.b and I.c:

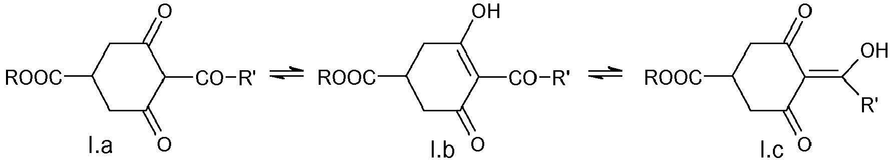

The salts of the compounds I may be the salts either of the monoanions or of the dianions of these compounds. The monoanions may be present either as carboxylate anions I.d or as enolate anions I.e or I.f:

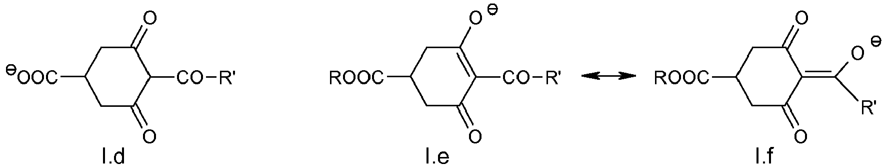

In the dianion, the carboxylate and the enolate groups are accordingly present alongside one another.

Preferably, the compound I is Prohexadione or Trinexapac, or a salt thereof.

Preferred cations in the salts of the compounds I are the ions of the alkali metals, preferably of lithium, sodium and potassium, of the alkaline earth metals, preferably of calcium and magnesium, and of the transition metals, preferably of manganese, copper, zinc and iron, and also ammonium (NH⁴⁺) and substituted ammonium, in which 1 to 4 hydrogen atoms are replaced by C₁-C₄-alkyl, hydroxy-C₁-C₄-alkyl, C₁-C₄-alkoxy-C₁-C₄-alkyl, hydroxy-C₁-C₄-alkoxy-C₁-C₄-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyeth-1-oxy)eth-1-ylammonium, di(2-hydroxyeth-1-yl)ammonium, benzyltrimethylammonium, benzyltriethylammonium, and additionally phosphonium ions, sulfonium ions, preferably tri(C₁-C₄-alkyl)sulfonium such as trimethylsulfonium, and sulfoxonium ions, preferably tri(C₁-C₄-alkyl)sulfoxonium. Preferred cations are also chlormequat [(2-chloroethyl)trimethylammonium], mepiquat (N,N-dimethylpiperidinium) and N,N-dimethylmorpholinium. Particularly preferred cations are the alkali metal cations, the alkaline earth metal cations and the ammonium cation (NH⁴⁺). The compound is especially the calcium salt.

The acylycyclohexandione compound I is preferably prohexadione-calcium (prohexadione-Ca). Prohexadione-Ca (3,5-dioxo-4-propionylcyclohexanecarboxylic acid) is a well known plant growth regulator, which is commercially available for example as Regalis® or Apogee® from BASF SE.

Preferably, Prohexadione-Ca is applied in combination with a solid acidifier, such as an organic acid, preferably citric acid, preferably in a weight ratio of about from 3:1 to 1:3, in particular of about 1:1.

Preferably, component 2) is a gibberellin of formula II 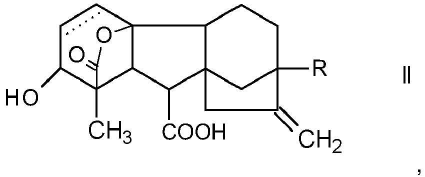 in which
R is a hydrogen atom or a hydroxyl group and
--- the hatched line indicates that the ring contains in this location either a C-C single bond or a C=C double bond;
which is described in WO 02/069715.

More preferably component 2) is of the formulae II-1 to II-4:
gibberellin A₁: 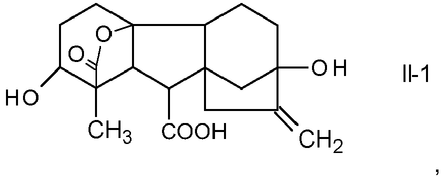
gibberellin A₃: 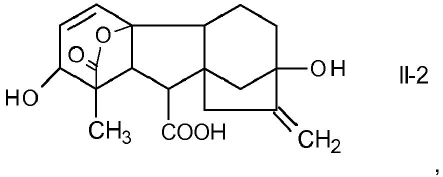
gibberellin A₄: 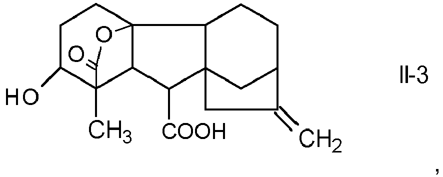 and
gibberellin A₇:

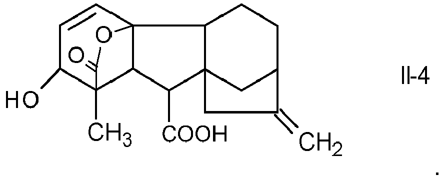

More preferably, component 2) is selected from gibberellins A₁ and A₄., in particular gibberellin A₄.

Even more preferably, component 2) comprises a mixture of the gibberellins A₄ and A₇ (also called GA_{4/7}). In another embodiment, this mixture of gibberellins A₄ and A₇ contains approx. of from 60 to 99.9999% (w/w) gibberellin A₄ of the total weight of both gibberellins; more preferably more than 99% (w/w) of the sum of both gibberellins is gibberellin A₄.

According to a further embodiment, component 1) and component 2) are present in a synergistically effective amount.

In the mixtures and compositions according to the invention the weight ratio of the component 1) and the component 2) generally depends from the properties of the active components used, usually it is in the range of from 10:1 to 1000:1, regularly in the range of from 50:1 to 500:1, preferably in the range of from 100:1 to 300:1.

According to a further embodiment, in the mixtures and compositions according to the invention the weight ratio of the component 1) and the component 2) is usually in the range of from 1:1 to 100:1, regularly in the range of from 3:1 to 50:1, preferably in the range of from 5:1 to 20:1.

The invention can be used in a broad variety of fruit plants such as pome fruits, stone fruits, berry fruits and citrus fruits, preferably in pome and stone fruits, even more preferably pome fruits.

Pome fruit plants are rosaceous plants, mostly woody shrubs and trees such as apple, cotoneaster, hawthorn, loquat, medlar, pear, pyracantha, toyon, quince, rowan, and whitebeam many of which are cultivated to produce their edible fruits. Preferably, the pome fruit plant is selected from apple, cotoneaster, hawthorn, loquat, medlar, pear, pyracantha, toyon, quince, rowan, and whitebeam, more preferably selected from apple and pear, in particular apple.

Stone fruits are preferably selected from genus Prunus, including almond, apricot, cherry, damson, nectarine, peach and plum, in particular peach.

Berry fruits are preferably selected from avocado (Persea americana), banana, blueberry (Vaccinium spp.), kiwi fruit, bilberry, cranberry, currant (Ribes spp.; Grossulariaceae) red, black, and white types, gooseberry (Ribes spp.; Grossulariaceae) and table and vine grape (Vitis vinifera), more preferably from table and vine grape.

Citrus fruits are preferably selected from oranges, tangerines, grapefruits, limes, lemons and clementines.

The use according to the invention also leads to an improved fruit siz, improved yield and improved fruit quality such as content of total soluble solids (TSS) and acidity (acid concentration).

The abovementioned use is preferred, when the mixture is applied onto the fruit plants at their growth stage BBCH 71 to 75, more preferably at BBCH from 72 to 73.

It is also an object of the present invention to provide, with a view to effective fruit thinning in fruit plants, at application rates which are as low as possible, compositions which, at a reduced total amount of active compounds applied, have improved fruit thinning activity and/or less dependency of this activity on timing, in particular for apples.

Thus, the invention also relates to an aqueous composition comprising an auxiliary and the mixture of component 1) and component 2) as defined herein.

Further, the invention also relates to a method for fruit thinning of fruit plants comprising the application of an aqueous composition comprising a mixture comprising component 1) and component 2) as defined herein onto the fruit plants at their growth stage BBCH from 71 to 75, more preferably at BBCH from 72 to 73. This method preferably applies to pome fruits and in particular to apples.

Further, the invention also relates to a method for fruit thinning of fruit plants comprising the application of an aqueous composition comprising a mixture comprising component 1) and component 2) as defined herein onto the pome fruit plants from full bloom to 8 weeks after full bloom, more preferably from 2 to 4 weeks after full bloom. This method preferably applies to pome fruits and in particular to apples.

According to another embodiment of these methods, the fruit plants are treated when bearing fruits with an average size of from 6 to 40 mm diameter, more preferably with an average size of from 10 to 40 mm diameter. This method preferably applies to pome fruits and in particular to apples.

According to a further embodiment, the component 1) is applied in an amount from 50 to 500 g per ha and the component 2) is applied in an amount of 0.5 to 100 g per ha. This method preferably applies to pome fruits and in particular to apples.

According to a further embodiment, the component 1) is applied in an amount from 10 to 100 g per m crown height and ha, more preferably 25 to 75 g per m crown height and ha; and the component 2) is applied in an amount of 0.01 to 10 g per m crown height and ha, preferably in pome fruit orchards and in particular in apple orchards. The dosages refer to typical professional apple orchards, wherein the apple trees are based on dwarfing rootstocks such as Malus paradisiaca M9. Most apple cutivars are are grafted on this European standard rootstock M9.

The mixtures and compositions thereof according to the invention can, in the use form as fruit thinning agents, also be present together with other active substances, e. g. with herbicides, insecticides, further bio regulators, fungicides or else with fertilizers, as pre-mix or, if appropriate, not until immeadiately prior to use (tank mix).

Accordint to a further embodiment, the mixtures and compositions thereof consist of as active components component 1) and component 2) as describved herein. This means that these mixtures may not contain a further active substance.

Mixing the component 1) and component 2) or the compositions comprising them, respectively, in the use form as fruit thinning agents with other plant growth regulators results in many cases in an increase of the fruit thinning activity being obtained or in a prevention of poor fruit thinning under certain environmental conditions. Furthermore, in many cases, synergistic effects are obtained.

Preferably, such ternary mixtures comprise as active component 3) a further active compound, preferably in a synergistically effective amount. Another embodiment relates to mixtures wherein the component 3) is an active compound III selected from the class of bio regulators:
- abscisic acid, amidochlor, ancymidol, 6-benzylaminopurine, brassinolide, butralin, chlormequat (chlormequat chloride), choline chloride, carbaryl, cyclanilide, daminozide, dike-gulac, dimethipin, 2,6-dimethylpuridine, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohydrojasmon, thidiazuron, triapenthenol, tributyl phosphorotrithioate, 2,3,5-tri-iodobenzoic acid, trinexapac-ethyl and uniconazole.

More preferably, such ternary mixtures comprise as active component 3) carbaryl.

The mixtures and compositions according to the invention are particularly important in fruit thinning of pome fruits such as apples cotoneaster, hawthorn, loquat, medlar, pear, pyracantha, toyon, quince, rowan, and whitebeam, more preferably selected from apples and pears, in particular apples.

Component 1) and component 2) can be converted into customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the " Catalogue of pesticide formulation types and international coding system" , Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon' s Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the compound I on the target. Examples are surfactants, mineral or vegetable oils, and other auxilaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and watersoluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidons, polyvinylacetates, polyvinyl alcohols, polyacrylates, biological or synthetic waxes, and cellulose ethers.

The agrochemical compositions generally comprise between 0.01 and 95%, preferably between 2 and 90%, and in particular between 10 and 75%, by weight of active components.

The mixtures comprising component 1) and component 2) or the compositions thereof are applied in a rate which provides effective fruit thinning in the respective fruit plant.

The preparations are applied to the plants mainly by spraying, in particular foliar spraying. Application can be carried out by customary spraying techniques using, for example, water as carrier and spray liquid rates of from about 50 to 1000 l/ha (for example from 300 to 400 l/ha). Application of the preparations by the low-volume and the ultra-low-volume method is possible, as is their application in the form of microgranules.

Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

In the ternary mixtures, i.e. compositions according to the invention comprising the component 1) and component 2) and a compound III (component 3), the weight ratio of component 1) and component 2) depends from the properties of the active substances used, usually it is in the range of from 1:100 to 100:1, regularly in the range of from 1:50 to 50:1, preferably in the range of from 1:20 to 20:1, more preferably in the range of from 1:10 to 10:1 and in particular in the range of from 1:4 to 4:1, and the weight ratio of component 1) and component 3) usually it is in the range of from 1:100 to 100:1, regularly in the range of from 1:50 to 50:1, preferably in the range of from 1:20 to 20:1, more preferably in the range of from 1:10 to 10:1 and in particular in the range of from 1:4 to 4:1.

Any further active components are, if desired, added in a ratio of from 20:1 to 1:20 to the component 1).

In the mixtures and compositions, the compound ratios are advantageously chosen so as to produce a synergistic effect.

The term "synergstic effect" is understood to refer in particular to that defined by Colby's formula (Colby, S. R., "Calculating synergistic and antagonistic responses of herbicide combinations", Weeds, 15, pp. 20-22, 1967).

The term "synergistic effect" is also understood to refer to that defined by application of the Tammes method, (Tammes, P. M. L., "Isoboles, a graphic representation of synergism in pesticides", Netherl. J. Plant Pathol. 70, 1964).

The components can be used individually or already partially or completely mixed with one another to prepare the composition according to the invention. It is also possible for them to be packaged and used as combination such as a kit of parts.

The defoliating and/or desiccating action of the mixtures and compositions according to the invention can be shown by the tests described below.

## Claims

1. Use of a mixture comprising, as active components,
1) at least one compound of formula I 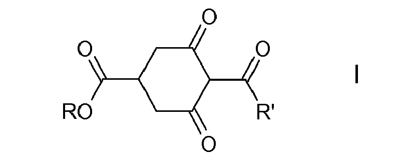 wherein
R is hydrogen or C₁-C₆-alkyl, and R' is C₁-C₆-alkyl or C₃-C₆-cycloalkyl, or a salt of said acylcyclohexanedione of the formula I;
and
2) at least one gibberellin;
for fruit thinning in fruit plants.

2. The use according to claim 1, wherein compound of formula I is Prohexadione or Trinexapac, or a salt thereof.

3. The use according to claim 2, wherein component 1) is Prohexadione-Ca.

4. The use according to any of the claims 1 to 2, wherein the component 2) comprises gibberellin GA₁ and/or GA₄.

5. The use according to any of the claims 1 to 3, wherein the component 2) is a mixture of the gibberellins GA₄ and GA₇ (GA_{4/7}).

6. The use according to any of the claim1 to 5, wherein the component 1) and component 2) are present in a synergistically effective amount.

7. The use according to any of the claim1 to 6, wherein the component 1) and component 2) are used in a ratio of from 500 : 1 to 1 : 1.

8. The use according to any of the claims 1 to 7, wherein the fruit plant is selected from pome fruits and stone fruits.

9. The use according to claim 8, wherein the fruit plant is apple or peach.

10. The use according to any of the claims 1 to 9, wherein the mixture is applied onto the pome fruit plants at their growth stage BBCH 71 to 75.

11. An aqueous composition comprising an auxiliary and the mixture as defined in any of the claims 1 to 7.

12. A method for fruit thinning of fruit plants comprising the application of an aqueous composition as defined in claim 11 onto the fruit plants at their growth stage BBCH from 71 to 75.

13. A method for fruit thinning of fruit plants comprising the application of an aqueous composition as defined in claim 11 onto the fruit plants bearing fruits with an average size of from 6 to 40 mm diameter.

14. The method according to any of the claims 12 to 13, wherein the component 1) is applied in an amount from 50 to 500 g per ha and the component 2) is applied in an amount of 0.5 to 100 g per ha.

15. The method according to any of the claims 12 to 13, wherein the component 1) is applied in an amount from 10 to 500 g per m crown height and ha and the component 2) is applied in an amount of 0.01 to 10 g per m crown height and ha.
